# EUROPEAN PATENT APPLICATION

(11) **EP 4 832 101 A2**
(43) Date of publication of application: **28.10.2026**
(21) Application number: 26204650.1
(22) Date of filing: 11.09.2026
(51) Int. Cl.: H01M 4/505, H01M 4/36, H01M 4/525, H01M 4/02

(54) **POSITIVE ELECTRODE MATERIAL, ELECTROCHEMICAL APPARATUS AND ELECTRONIC APPARATUS**

(30) Priority: 12.09.2025 CN 202511307670
(71) Applicant: Ningde Amperex Technology Limited, Ningde, Fujian 352100 (CN)
(72) Inventor: NI, Lianshan, Ningde, 352100 (CN); CHENG, Shiyang, Ningde, 352100 (CN); LANG, Ye, Ningde, 352100 (CN); XU, Leimin, Ningde, 352100 (CN)
(74) Representative: Dehns Germany Partnerschaft mbB

(57) **Abstract**

This application discloses a positive electrode material, an electrochemical apparatus, and an electronic apparatus, where the positive electrode material includes a lithium nickel manganese composite oxide, the positive electrode material includes a first region within 5 nm from a surface of the positive electrode material, a second region at a distance of 20 nm to 100 nm from the surface of the positive electrode material, and a third region at a distance of more than 1000 nm from the surface of the positive electrode material; and the positive electrode material includes Na, and based on a total molar amount of Ni and Mn in the first region, a molar percentage of Na in the first region is C_{1Na}; based on a total molar amount of Ni and Mn in the second region, a molar percentage of Na in the second region is c_{2Na}; and based on a total molar amount of Ni and Mn in the third region, a molar percentage of Na in the third region is c_{3Na}; where 1.1≤c_{1Na}/c_{2Na}≤3, and 1.5≤c_{3Na}/c_{2Na}≤3. The electrochemical apparatus in this application has good high-temperature cycling performance and kinetic performance under high temperature and a high voltage, and also has improved gas generation behavior.

## Description

### TECHNICAL FIELD

This application relates to the field of electrochemistry, and in particular, to a positive electrode material, an electrochemical apparatus and an electronic apparatus.

### BACKGROUND

With increasingly high market demands for long battery life of electronic devices, energy density of electrochemical apparatuses (for example, lithium-ion batteries) urgently needs to be improved. Increasing working voltages is an effective way to improve the energy density of the electrochemical apparatuses. However, after the working voltages are increased, problems such as oxygen release from positive electrode materials, electrolyte decomposition, gas generation of battery cells and abrupt capacity drop after cycling may occur. Therefore, there is an urgent need to develop electrochemical apparatuses with high energy density, better cycling performance and high safety.

### SUMMARY OF THE INVENTION

In view of this, this application provides a positive electrode material, an electrochemical apparatus, and an electronic apparatus.

A first aspect of this application provides a positive electrode material. The positive electrode material includes a lithium nickel manganese composite oxide, the positive electrode material includes a first region within 5 nm from a surface of the positive electrode material, a second region at a distance of 20 nm to 100 nm from the surface of the positive electrode material, and a third region at a distance of more than 1000 nm from the surface of the positive electrode material; and the positive electrode material includes Na, and based on a total molar amount of Ni and Mn in the first region, a molar percentage of Na in the first region is c_{1Na}; based on a total molar amount of Ni and Mn in the second region, a molar percentage of Na in the second region is c_{2Na}; and based on a total molar amount of Ni and Mn in the third region, a molar percentage of Na in the third region is c_{3Na}; where 1.1≤c_{1Na}/c_{2Na}≤3, and 1.5≤c_{3Na}/c_{2Na}≤3.

In this application, gradient-distributed Na is introduced into the lithium nickel manganese composite oxide to build the "pillar" in the lithium layer and induce oxygen defects, so that the lithium nickel manganese composite oxide has a significantly increased reversible charge-discharge capacity in a high-voltage range (for example, 4.2 V to 4.5 V), thereby ensuring that the lithium nickel manganese composite oxide has higher structural stability and kinetic performance under high temperature and a high voltage while greatly improving the charge-discharge capacity of the positive electrode material. In addition, the presence of the oxygen defects on the surface improves the surface stability of the lithium nickel manganese composite oxide, inhibits oxygen release and structural phase transition on the surface of the positive electrode material, thereby improving the cycling performance and the gas generation of the electrochemical apparatus under the condition of the high temperature and the high voltage.

In addition, Na contents in the positive electrode material in this application gradually decrease from the first region to the second region, which can not only induce formation of the oxygen defects, but also exert the "pillar" effect in the lithium layer, thereby inhibiting the structural phase transition of the surface layer of the positive electrode material. In addition, the gradual decrease in Na contents can promote the Li layer to accommodate a greater amount of Li, thereby improving a charge-discharge specific capacity of the positive electrode material. Na contents gradually decrease from the first region to the second region, which can not only increase the energy density of the electrochemical apparatus, but also retain appropriate Na contents to ensure the cycling stability performance of the electrochemical apparatus. In addition, Na contents in the positive electrode material gradually increase from the second region to the third region, which can further improve lattice stability of the third region of the positive electrode material after delithiation, thereby further improving the cycling performance and the gas generation of the electrochemical apparatus under the condition of the high temperature and the high voltage.

According to the first aspect, in some possible implementations, c_{1Na} is 0.5% to 15%. When the molar percentage of Na in the first region is adjusted to fall within the foregoing range in this application, the lattice of the first region of the positive electrode material after delithiation can be better stabilized and the surface of the positive electrode material can be protected, thereby further improving the cycling performance and the gas generation of the electrochemical apparatus under the condition of the high temperature and the high voltage.

According to the first aspect, in some possible implementations, c_{2Na} is 0.3% to 5%. When the molar percentage of Na in the second region is adjusted to fall within the foregoing range in this application, the lattice stability of the second region of the positive electrode material after delithiation can be further improved, thereby further improving the cycling performance and the gas generation of the electrochemical apparatus under the condition of the high temperature and the high voltage.

According to the first aspect, in some possible implementations, c_{3Na} is 0.5% to 15%. When the molar percentage of Na in the third region is adjusted to fall within the foregoing range in this application, the lattice stability of the third region of the positive electrode material after delithiation can be further improved, thereby further improving the cycling performance and the gas generation of the electrochemical apparatus under the condition of the high temperature and the high voltage.

According to the first aspect, in some possible implementations, the positive electrode material includes Al. Based on a total molar amount of Ni and Mn in the first region, a molar percentage of Al in the first region is c_{1Al}; and based on a total molar amount of Ni and Mn in the second region, a molar percentage of Al in the second region is c_{2Al}, where 1.1≤c_{1Al}/c_{2Al}≤5.

In this application, when Al is added to the positive electrode material and a ratio of the molar percentages of Al in the first region and the second region is controlled to fall within the foregoing range, because Al can form a good coating layer on the surface of the positive electrode material at the high temperature and be gradient-doped inside the positive electrode material, the Al-containing coating layer can reduce direct contact between the positive electrode material in this application and the electrolyte, which helps reduce oxygen release from the surface of the positive electrode material and the gas generation under the electrolyte decomposition. In addition, Al can combine with O from the surface layer and the interior of the positive electrode material, which helps improve lattice oxygen stability, thereby further improving the cycling performance and the gas generation of the electrochemical apparatus under the condition of the high temperature and the high voltage.

According to the first aspect, in some possible implementations, c_{1Al} is 0.05% to 10%. In this application, when the molar percentage of Al in the first region is adjusted to fall within the foregoing range, oxygen on the surface of the lithium nickel manganese composite oxide can be further stabilized, thereby better inhibiting oxygen release and structural phase transition on the surface of the positive electrode material, and further improving the cycling performance and the gas generation of the electrochemical apparatus under the condition of the high temperature and the high voltage.

According to the first aspect, in some possible implementations, c_{2Al} is 0.01% to 5%. In this application, when the molar percentage of Al in the second region is adjusted to fall within the foregoing range, an appropriate amount of Al exists in the surface layer and interior of lithium nickel manganese composite oxide particles, which can further improve structural stability of crystals in the surface layer and interior of the positive electrode material, thereby further improving the cycling performance and the gas generation of the electrochemical apparatus under the condition of the high temperature and the high voltage.

According to the first aspect, in some possible implementations, the positive electrode material includes B. Based on a total molar amount of Ni and Mn in the first region, the molar percentage of B in the first region is c_{1B}; and based on a total molar amount of Ni and Mn in the second region, a molar percentage of B in the second region is c_{2B}, satisfying a condition: 2≤c_{1B}/c_{2B}≤20.

In this application, B is added to the positive electrode material and the molar percentages of B in the first region and the second region are adjusted to fall within the foregoing range, because B can form a good coating layer on the surface of the positive electrode material at low temperature, on the one hand, damage to oxygen defects constructed in the positive electrode material can be reduced; on the other hand, B can combine with O from the surface layer of the positive electrode material and reduce direct contact between the positive electrode material and the electrolyte, which can further inhibit oxygen release from the surface of the positive electrode material and the gas generation under the electrolyte decomposition, thereby improving the cycling performance and the gas generation of the electrochemical apparatus under the condition of the high temperature and the high voltage.

According to the first aspect, in some possible implementations, c_{1B} is 0.2% to 20%. In this application, when the molar percentage of B in the first region is adjusted to fall within the foregoing range, it is easier for B to form a coating layer on the positive electrode material to protect the surface of the positive electrode material, thereby further improving the cycling performance and the gas generation of the electrochemical apparatus under the condition of the high temperature and the high voltage.

According to the first aspect, in some possible implementations, c_{2B} is 0.01% to 4%. In this application, when the molar percentage of B in the second region is adjusted to fall within the foregoing range, surface stability of the positive electrode material can be further improved, thereby further improving the cycling performance and the gas generation of the electrochemical apparatus under the condition of the high temperature and the high voltage.

According to the first aspect, in some possible implementations, based on the total molar amount of Ni and Mn in the positive electrode material, the molar percentage of Ni in the positive electrode material is 45% to 95%.

According to the first aspect, in some possible implementations, based on the total molar amount of Ni and Mn in the positive electrode material, the molar percentage of Mn in the positive electrode material is 5% to 55%.

According to the first aspect, in some possible implementations, based on the total molar amount of Ni and Mn in the positive electrode material, the molar percentage of Li in the positive electrode material is 85% to 100%.

According to the first aspect, in some possible implementations, based on the total molar amount of Ni and Mn in the positive electrode material, the molar percentage of Na in the positive electrode material is 1% to 15%.

According to the first aspect, in some possible implementations, based on the total molar amount of Ni and Mn in the positive electrode material, the molar percentage of Al in the positive electrode material is 0.05% to 5%.

In this application, when the molar percentage of Al in the positive electrode material is adjusted to fall within the foregoing range, because an appropriate amount of Al is introduced into the positive electrode material, not only the energy density of the positive electrode material can be improved, but also Al can form the coating layer on the surface of the positive electrode material, which can reduce direct contact between the positive electrode material and the electrolyte; and Al can combine with O on the surface of the positive electrode material, thereby reducing oxygen release from the surface of the positive electrode material and gas generation under electrolyte decomposition, and further improving the cycling performance and the gas generation of the electrochemical apparatus under the condition of the high temperature and the high voltage.

According to the first aspect, in some possible implementations, based on the total molar amount of Ni and Mn in the positive electrode material, the molar percentage of B in the positive electrode material is 0.05% to 5%.

In this application, when the molar percentage of B in the positive electrode material is adjusted to fall within the foregoing range, because an appropriate amount of B is introduced into the positive electrode material, not only the energy density of the positive electrode material can be improved, but also B can form the coating layer on the surface of the positive electrode material, which can reduce direct contact between the positive electrode material and the electrolyte; and B can combine with O on the surface of the positive electrode material, thereby reducing oxygen release from the surface of the positive electrode material and gas generation under electrolyte decomposition, and further improving the cycling performance and the gas generation of the electrochemical apparatus under the condition of the high temperature and the high voltage.

According to the first aspect, in some possible implementations, a chemical formula of the lithium nickel manganese composite oxide is Liₓ₁Naₓ₂Ni_{y1}Mn_{y2}M_{y3}O_{2±m}Rₙ, where M includes at least one of K, Mg, Ca, Sc, Ti, V, Cr, Fe, Cu, Co, Al, Zn, Ga, Ge, Sr, Y, Zr, Nb, Mo, Ag, In, Sn, Sb, Ba, La, Ce, Hf, Ta, W, Pb, or Bi; and R includes at least one of F, Cl, Br, I, S, Se, or N, where 0.85≤x1≤1, 0.01≤x2≤0.15, 0.45≤y1≤0.95, 0.05≤y2≤0.55, 0≤y3≤0.1, 0≤m≤0.15, and 0≤n≤0.15.

A second aspect of this application provides an electrochemical apparatus, including a positive electrode sheet, where the positive electrode sheet includes the positive electrode material provided in the first aspect of this application. The electrochemical apparatus in this application has good kinetic performance, cycling performance, and gas generation behavior under the high temperature and the high voltage.

According to the second aspect, in some possible implementations, when the electrochemical apparatus is charged and discharged at a current of 0.1 C in a voltage range of 2.8 V to 4.5 V, an obtained differential capacity-voltage (dQ/dV) curve exhibits a first oxidation peak and a first reduction peak in a range of 4.2 V to 4.5 V.

Based on the second aspect, in some possible implementations, based on the mass of the positive electrode material, peak intensity of the first oxidation peak is greater than or equal to 875 mAh/g/V, and peak intensity of the first reduction peak is greater than or equal to 875 mAh/g/V. In this way, the positive electrode material can have a higher reversible charge-discharge capacity in a high-voltage range (2.8 V to 4.5 V), thereby greatly improving the energy density of the electrochemical apparatus.

According to the second aspect, in some possible implementations, a peak voltage of the first oxidation peak is Vo1, and a peak voltage of the first reduction peak is Vr1, where |Vo1-Vr1|≤0.145 V. In this way, reversibility of the positive electrode material in the high-voltage range is better, thereby improving the cycling performance of the electrochemical apparatus under the condition of the high voltage.

According to the second aspect, in some possible implementations, when the electrochemical apparatus is charged and discharged at a current of 0.1 C in a voltage range of 2.8 V to 4.5 V, a discharging curve in the obtained capacity-voltage curve exhibits a plateau in a range of 4.2 V to 4.5 V, a capacity of the discharging curve in the range of 4.2 V to 4.5 V is Q1, and a capacity of the discharging curve in the range of 3.0 V to 4.5 V is Qt, where 0.175≤Q1/Qt≤0.345. In this way, the positive electrode material can have a higher reversible charge-discharge capacity in the high-voltage range, thereby greatly improving the energy density of the electrochemical apparatus.

According to the second aspect, in some possible implementations, a differential capacity-voltage (dQ/dV) curve exhibits a second oxidation peak and a second reduction peak in a range of 3.6 V to 4.0 V.

According to the second aspect, in some possible implementations, an X-ray diffraction pattern of the positive electrode material exhibits characteristic diffraction peaks in 2θ ranges of 17° to 20°, 35° to 38°, and 42° to 46°.

According to the second aspect, in some possible implementations, unit cell parameter a of the positive electrode material satisfies a condition: 2.875 Å≤a≤3.125Å.

According to the second aspect, in some possible implementations, unit cell parameter c of the positive electrode material satisfies a condition: 14.345 Å≤c≤15.15Å.

According to the second aspect, in some possible implementations, the positive electrode material has a layered crystal structure belonging to an R-3m space group.

A third aspect of this application provides an electronic apparatus, including the electrochemical apparatus provided in the second aspect of this application. The electrochemical apparatus has good kinetic performance, cycling performance, and gas generation behavior under the high temperature and the high voltage, which is beneficial to prolonging service life of the electronic apparatus.

### BRIEF DESCRIPTION OF DRAWINGS

FIG. 1 is an X-ray diffraction pattern of positive electrode materials in Comparative Example 5 and Example 1.
FIG. 2 is an SEM image of a positive electrode material in Example 1.
FIG. 3 is an EPMA image of Na in a positive electrode material in Example 1.
FIG. 4 is an EPMA image of Al in a positive electrode material in Example 1.
FIG. 5 is an EPMA image of B in a positive electrode material in Example 1.
FIG. 6 shows charge-discharging curves of coin-type lithium-ion batteries in Comparative Example 5 and Example 1.
FIG. 7 shows differential capacity-voltage curves of coin-type lithium-ion batteries in Comparative Example 5 and Example 1.

### DESCRIPTION OF EMBODIMENTS

The embodiments of this application are described in detail below. The embodiments described below with reference to the accompanying drawings are exemplary and are only used to explain this application, and cannot be understood as a limitation on this application. Reagents and materials in the following embodiments are all commercially available.

### Positive electrode material

An embodiment of this application provides a positive electrode material. The positive electrode material includes a lithium nickel manganese composite oxide, the positive electrode material includes a first region within 5 nm from a surface of the positive electrode material, a second region at a distance of 20 nm to 100 nm from the surface of the positive electrode material, and a third region at a distance of more than 1000 nm from the surface of the positive electrode material; and the positive electrode material includes Na, and based on a total molar amount of Ni and Mn in the first region, a molar percentage of Na in the first region is c_{1Na}; based on a total molar amount of Ni and Mn in the second region, a molar percentage of Na in the second region is c_{2Na}; and based on a total molar amount of Ni and Mn in the third region, a molar percentage of Na in the third region is c_{3Na}; where 1.1≤c_{1Na}/c_{2Na}≤3, and 1.5≤c_{3Na}/c_{2Na}≤3. For example, a value obtained by dividing c_{1Na} by c_{2Na} (c_{1Na}/c_{2Na}) may be 1.1, 1.2, 1.3, 1.4, 1.5, 1.6, 1.7, 1.8, 1.9, 2, 2.1, 2.2, 2.4, 2.5, 2.6, 2.7, 2.8, 2.9, or 3 or any value within a range composed of any preceding values. For example, a value obtained by dividing c_{3Na} by c_{2Na} (c_{3Na}/c_{2Na}) may be 1.5, 1.6, 1.7, 1.8, 1.9, 2, 2.1, 2.2, 2.4, 2.5, 2.6, 2.7, 2.8, 2.9, or 3 or any value within a range composed of any preceding values. When the value obtained by dividing c_{1Na} by c_{2Na} (c_{1Na}/c_{2Na}) is excessively high, for example, exceeding an upper limit in this application, nonuniform distribution of Na in the first region and the second region in the positive electrode material is caused, and lattice distortion is triggered, which deteriorates cycling performance and gas generation of the electrochemical apparatus under high temperature and a high voltage. When the value obtained by dividing c_{1Na} by c_{2Na} (c_{1Na}/c_{2Na}) is excessively low, for example, falling below a lower limit in this application, Na content in the second region of the positive electrode material is excessively high, and Na distribution is excessively uniform, which exerts a limited improvement effect on a charge-discharge capacity of the positive electrode material. Without being bound by any theory, the inventors of this application have found that when the value obtained by dividing c_{1Na} by c_{2Na} (c_{1Na}/c_{2Na}) falls within the foregoing range, Na contents in the positive electrode material gradually decrease from the first region to the second region, which can not only induce formation of oxygen defects, but also exert a "pillar" effect in a lithium layer, thereby inhibiting structural phase transition of a surface layer of the positive electrode material. In addition, a gradual decrease in Na contents can promote a Li layer to accommodate more Li, thereby improving a charge-discharge specific capacity of the positive electrode material. When the value obtained by dividing c_{3Na} by c_{2Na} (c_{3Na}/c_{2Na}) is excessively high, for example, exceeding an upper limit in this application, nonuniform distribution of Na in the second region and the third region is caused, and lattice distortion is triggered, which deteriorates cycling performance and gas generation of the electrochemical apparatus under high temperature and a high voltage. When the value obtained by dividing c_{3Na} by c_{2Na} (c_{3Na}/c_{2Na}) is excessively low, for example, falling below a lower limit in this application, Na content in the second region of the positive electrode material is excessively high, and Na distribution is excessively uniform, which exerts a limited improvement effect on the charge-discharge capacity of the positive electrode material. Without being bound by any theory, the inventors of this application have found that when the value obtained by dividing c_{3Na} by c_{2Na} (c_{3Na}/c_{2Na}) falls within the foregoing range, Na contents in the positive electrode material gradually increase from the second region to the third region, which can further improve lattice stability of the third region of the positive electrode material after delithiation, thereby further improving the cycling performance and the gas generation of the electrochemical apparatus under the condition of the high temperature and the high voltage.

In some implementations of this application, c_{1Na} is 0.5% to 15%. For example, c_{1Na} may be 0.5%, 1%, 2%, 3%, 4%, 5%, 6%, 7%, 8%, 9%, 10%, 11%, 12%, 13%, 14%, or 15% or any value within a range composed of any preceding values. When the molar percentage of Na in the first region is excessively high, for example, exceeding the upper limit in this application, excessively high residual alkali on the surface of the positive electrode material is caused, which deteriorates the cycling performance and the gas generation of the electrochemical apparatus under the high temperature and the high voltage. When the molar percentage of Na in the first region is excessively low, for example, falling below a lower limit in this application, a small amount of Na on the surface of the positive electrode material cannot fully exert the "pillar" effect, which causes structural instability to the surface layer of the positive electrode material, and deteriorates the cycling performance and the gas generation of the electrochemical apparatus under the high temperature and the high voltage. Without being bound by any theory, the inventors of this application have found that when the molar percentage of Na in the first region falls within the foregoing range, lattice of the first region of the positive electrode material after delithiation can be better stabilized and the surface of the positive electrode material is protected, thereby further improving the cycling performance and the gas generation of the electrochemical apparatus under the condition of the high temperature and the high voltage.

In some implementations of this application, c_{2Na} is 0.3% to 5%. For example, c_{2Na} may be 0.3%, 0.5%, 1%, 1.2%, 1.3%, 1.4%, 1.5%, 1.6%, 2%, 2.2%, 2.4%, 2.6%, 2.8%, 3%, 3.2%, 3.4%, 3.5%, 3.7%, 3.9%, 4%, 4.2%, 4.4%, 4.6%, 4.8%, or 5%, or any value within a range composed of any preceding values. When the molar percentage of Na in the second region is excessively high, for example, exceeding the upper limit in this application, there is excess Na on the surface of the positive electrode material and fewer sites are available for Li⁺ storage, which exerts a limited improvement effect on the charge-discharge capacity of the positive electrode material. When the molar percentage of Na in the second region is excessively low, for example, falling below a lower limit in this application, Na distribution on the surface of the positive electrode material is very nonuniform, which triggers lattice distortion and deteriorates the cycling performance and the gas generation of the electrochemical apparatus under the high temperature and the high voltage. Without being bound by any theory, the inventors of this application have found that when the molar percentage of Na in the second region falls within the foregoing range, the lattice stability of the second region of the positive electrode material after delithiation can be further improved, thereby further improving the cycling performance and the gas generation of the electrochemical apparatus under the condition of the high temperature and the high voltage.

In some implementations of this application, c_{3Na} is 0.5% to 15%. For example, c_{3Na} may be 0.5%, 1%, 2%, 3%, 4%, 5%, 6%, 7%, 8%, 9%, 10%, 11%, 12%, 13%, 14%, 15% or any value within a range composed of any preceding values. When the molar percentage of Na in the third region is excessively high, for example, exceeding the upper limit in this application, there is excess Na in the bulk phase of the positive electrode material and fewer sites are available for Li⁺ storage, which decreases the energy density of the positive electrode material. When the molar percentage of Na in the third region is excessively low, for example, falling below a lower limit in this application, a small amount of Na in the bulk phase of the positive electrode material cannot exert the "pillar" effect, which causes structural instability to the bulk phase of the positive electrode material and deteriorates the cycling performance and the gas generation of the electrochemical apparatus under the high temperature and the high voltage. Without being bound by any theory, the inventors of this application have found that when the molar percentage of Na in the third region falls within the foregoing range, the lattice stability of the third region of the positive electrode material after delithiation can be further improved, thereby further improving the cycling performance and the gas generation of the electrochemical apparatus under the condition of the high temperature and the high voltage.

In some implementations of this application, the positive electrode material includes Al. Based on a total molar amount of Ni and Mn in the first region, a molar percentage of Al in the first region is c_{1Al}; and based on a total molar amount of Ni and Mn in the second region, a molar percentage of Al in the second region is c_{2Al}, where 1.1≤c_{1Al}/c_{2Al}≤5. For example, a value obtained by dividing c_{1Al} by c_{2Al} (c_{1Al}/c_{2Al}) may be 1.1, 1.2, 1.3, 1.5, 1.6, 1.7, 1.8, 1.9, 2, 2.1, 2.2, 2.4, 2.5, 2.6, 2.7, 2.8, 2.9, 3, 3.2, 3.4, 3.5, 3.6, 3.7, 3.8, 3.9, 4, 4.2, 4.4, 4.5, 4.6, 4.7, 4.8, 4.9, or 5 or any value within a range composed of any preceding values. When the value obtained by dividing c_{1Al} by c_{2Al} (c_{1Al}/c_{2Al}) is excessively high, for example, exceeding the upper limit in this application, Al is mainly enriched on the surface of the positive electrode material but does not enter the surface layer of the positive electrode material, which cannot further improve structural stability of the surface layer of the positive electrode material, thereby deteriorating the cycling performance and the gas generation behavior of the electrochemical apparatus under the high temperature and the high voltage. When the value obtained by dividing c_{1Al} by c_{2Al} (c_{1Al}/c_{2Al}) is excessively low, for example, falling below the lower limit in this application, Al content on the surface of the positive electrode material is excessively low, and as a result, the surface of the positive electrode cannot be effectively protected, which causes oxygen release from the surface of the positive electrode material and gas generation under electrolyte decomposition, thereby aggravating the deterioration of the cycling performance and the gas generation behavior of the electrochemical apparatus under the high temperature and the high voltage. Without being bound by any theory, the inventors of this application have found that when the value obtained by dividing c_{1Al} by c_{2Al} (c_{1Al}/c_{2Al}) falls within the foregoing range, because Al can form a good coating layer on the surface of the positive electrode material at high temperature and be gradient-doped inside the positive electrode material, the Al-containing coating layer can separate the positive electrode material in this application from the electrolyte, which helps reduce oxygen release from the surface of the positive electrode material and the gas generation under the electrolyte decomposition. In addition, Al can combine with O from the surface layer and the interior of the positive electrode material, which helps improve lattice oxygen stability of the positive electrode material, thereby further improving the cycling performance and the gas generation of the electrochemical apparatus under the condition of the high temperature and the high voltage.

In some implementations of this application, c_{1Al} is 0.05% to 10%. For example, c_{1Al} may be 0.05%, 0.1%, 0.3%, 0.5%, 1%, 2%, 3%, 4%, 5%, 6%, 7%, 8%, 9%, or 10% or any value within a range composed of any preceding values. In this application, when the molar percentage of Al in the first region is adjusted to fall within the foregoing range, oxygen on the surface of the lithium nickel manganese composite oxide can be further stabilized, thereby better inhibiting oxygen release and structural phase transition on the surface of the positive electrode material, and further improving the cycling performance and the gas generation of the electrochemical apparatus under the condition of the high temperature and the high voltage.

In some implementations of this application, c_{2Al} is 0.01% to 5%. For example, c_{2Al} may be 0.01%, 0.03%, 0.05%, 0.1%, 0.3%, 0.5%, 1%, 1.2%, 1.3%, 1.4%, 1.5%, 1.6%, 1.7%, 1.8%, 1.9%, 2%, 2.2%, 2.4%, 2.6%, 2.8%, 3%, 3.2%, 3.4%, 3.6%, 3.8%, 4%, 4.2%, 4.4%, 4.6%, 4.8%, or 5% or any value within a range composed of any preceding values. In this application, when the molar percentage of Al in the second region is adjusted to fall within the foregoing range, an appropriate amount of Al exists in the surface layer and interior of lithium nickel manganese composite oxide particles, which can further improve structural stability of crystals in the surface layer and interior of the positive electrode material, thereby further improving the cycling performance and the gas generation of the electrochemical apparatus under the condition of the high temperature and the high voltage.

In some implementations of this application, the positive electrode material includes B. Based on a total molar amount of Ni and Mn in the first region, the molar percentage of B in the first region is c_{1B}; and based on a total molar amount of Ni and Mn in the second region, a molar percentage of B in the second region is c_{2B}, satisfying a condition: 2≤c_{1B}/c_{2B}≤20. When a value obtained by dividing c_{1B} by c_{2B} (c_{1B}/c_{2B}) is excessively high, for example, exceeding the upper limit in this application, B is mainly enriched on the surface of the positive electrode material but does not enter the surface layer of the positive electrode material, which cannot further improve structural stability of the surface layer of the positive electrode material, thereby deteriorating the cycling performance and the gas generation behavior of the electrochemical apparatus under the high temperature and the high voltage. When the value obtained by dividing c_{1B} by c_{2B} (c_{1B}/c_{2B}) is excessively low, for example, falling below the lower limit of this application, B content in the surface of the positive electrode material is excessively low, and as a result, the surface of the positive electrode material cannot be effectively protected, which causes oxygen release from the surface of the positive electrode material and gas generation under electrolyte decomposition, thereby aggravating the deterioration of the cycling performance and the gas generation behavior of the electrochemical apparatus under the high temperature and the high voltage. Without being bound by any theory, the inventors of this application have found that when the value obtained by dividing c_{1B} by c_{2B} (c_{1B}/c_{2B}) falls within the foregoing range, because B can form a good coating layer on the surface of the positive electrode material at low temperature, on the one hand, damage to oxygen defects constructed in the positive electrode material can be reduced; on the other hand, B can combine with O from the surface layer of the positive electrode material and separate the surface layer of the positive electrode material from the electrolyte, which can further inhibit oxygen release from the surface of the positive electrode material and the gas generation under the electrolyte decomposition, thereby improving the cycling performance and the gas generation of the electrochemical apparatus under the condition of the high temperature and the high voltage.

In some implementations of this application, c_{1B} is 0.2% to 20%. For example, c_{1B} may be 0.2%, 0.3%, 0.5%, 1%, 1.3%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 12.5%, 13%, 13.5%, 14%, 14.5%, 15%, 15.5%, 16%, 16.5%, 17%, 17.5%, 18%, 18.5%, 19%, 19.5%, or 20% or any value within a range composed of any preceding values. In this application, when the molar percentage of B in the first region is adjusted to fall within the foregoing range, it is easier for B to form a coating layer on the positive electrode material to protect the surface of the positive electrode material, thereby further improving the cycling performance and the gas generation of the electrochemical apparatus under the condition of the high temperature and the high voltage.

In some implementations of this application, c_{2B} is 0.01% to 4%. For example, c_{2B} may be 0.01%, 0.05%, 0.1%, 0.2%, 0.3%, 0.5%, 1%, 1.3%, 1.5%, 1.7%, 2%, 2.2%, 2.5%, 2.7%, 2.8%, 3%, 3.1%, 3.2%, 3.3%, 3.4%, 3.5%, 3.6%, 3.7%, 3.8%, 3.9%, or 4% or any value within a range composed of any preceding values. In this application, when the molar percentage of B in the second region is adjusted to fall within the foregoing range, surface stability of the positive electrode material can be further improved, thereby further improving the cycling performance and the gas generation of the electrochemical apparatus under the condition of the high temperature and the high voltage.

In some implementations of this application, based on the total molar amount of Ni and Mn in the positive electrode material, a molar percentage of Ni in the positive electrode material is 45% to 95%. For example, the molar percentage of Ni in the positive electrode material may be 45%, 47%, 49%, 50%, 52%, 54%, 55%, 57%, 59%, 60%, 62%, 64%, 65%, 67%, 68%, 70%, 72%, 74%, 76%, 78%, 80%, 82%, 84%, 86%, 88%, 90%, 92%, 93%, or 95% or any value within a range composed of any preceding values.

In some implementations of this application, based on the total molar amount of Ni and Mn in the positive electrode material, a molar percentage of Mn in the positive electrode material is 5% to 55%. For example, the molar percentage of Mn in the positive electrode material may be 5%, 7%, 10%, 12%, 15%, 17%, 20%, 22%, 25%, 27%, 29%, 30%, 32%, 34%, 35%, 37%, 40%, 42%, 45%, 47%, 50%, 52%, 53%, 54%, or 55% or any value within a range composed of any preceding values.

In some implementations of this application, based on the total molar amount of Ni and Mn in the positive electrode material, the molar percentage of Li in the positive electrode material is 85% to 100%. For example, the molar percentage of Li in the positive electrode material may be 85%, 86%, 87%, 88%, 89%, 90%, 91%, 92%, 93%, 94%, 95%, 96%, 97%, 98%, 99%, or 100% or any value within a range composed of any preceding values.

In some implementations of this application, based on the total molar amount of Ni and Mn in the positive electrode material, a molar percentage of Na in the positive electrode material is 1% to 15%. For example, the molar percentage of Na in the positive electrode material may be 1%, 2%, 3%, 4%, 5%, 6%, 7%, 8%, 9%, 10%, 11%, 12%, 13%, 14%, or 15% or any value within a range composed of any preceding values.

In some implementations of this application, based on the total molar amount of Ni and Mn in the positive electrode material, a molar percentage of Al in the positive electrode material is 0.05% to 5%. For example, the molar percentage of Al in the positive electrode material may be 0.05%, 0.1%, 0.3%, 0.5%, 0.7%, 1%, 1.2%, 1.3%, 1.5%, 1.7%, 2%, 2.2%, 2.4%, 2.6%, 2.8%, 3%, 3.2%, 3.4%, 3.5%, 3.7%, 3.9%, 4%, 4.2%, 4.4%, 4.6%, 4.8%, or 5% or any value within a range composed of any preceding values. In this application, when the molar percentage of Al in the positive electrode material is adjusted to fall within the foregoing range, because an appropriate amount of Al is introduced into the positive electrode material, it is beneficial to improving the energy density of the positive electrode material, and Al can form a coating layer on the surface of the positive electrode material to effectively separate the positive electrode material from the electrolyte, and Al can combine with O on the surface of the positive electrode material, thereby reducing oxygen release from the surface of the positive electrode material and gas generation under electrolyte decomposition, and further improving the cycling performance and the gas generation of the electrochemical apparatus under the condition of the high temperature and the high voltage.

In some implementations of this application, based on the total molar amount of Ni and Mn in the positive electrode material, a molar percentage of B in the positive electrode material is 0.05% to 5%. For example, the molar percentage of B in the positive electrode material may be 0.05%, 0.1%, 0.3%, 0.5%, 0.7%, 1%, 1.2%, 1.3%, 1.5%, 1.7%, 2%, 2.2%, 2.4%, 2.6%, 2.8%, 3%, 3.2%, 3.4%, 3.5%, 3.7%, 3.9%, 4%, 4.2%, 4.4%, 4.6%, 4.8%, or 5% or any value within a range composed of any preceding values.

In some implementations of this application, a chemical formula of the lithium nickel manganese composite oxide is Liₓ₁Naₓ₂Ni_{y1}Mn_{y2}M_{y3}O_{2±m}Rₙ, where M includes at least one of K, Mg, Ca, Sc, Ti, V, Cr, Fe, Cu, Co, Al, Zn, Ga, Ge, Sr, Y, Zr, Nb, Mo, Ag, In, Sn, Sb, Ba, La, Ce, Hf, Ta, W, Pb, or Bi; and R includes at least one of F, Cl, Br, I, S, Se, or N, where 0.85≤x1≤1, 0.01≤x2≤0.15, 0.45≤y1≤0.95, 0.05≤y2≤0.55, 0≤y3≤0.1, 0≤m≤0.15, and 0≤n≤0.15.

A preparation method of the foregoing positive electrode material includes the following steps:

Step S1: Dissolve a nickel source and a manganese source in water to obtain a first aqueous solution, and under a nitrogen atmosphere, mix the first aqueous solution with a precipitant and a complexing agent for reaction, followed by filtration, water washing and drying to obtain a nickel-manganese based precursor.

In some implementations, the nickel source includes at least one of nickel sulfate, nickel acetate, nickel nitrate or nickel chloride. The manganese source includes at least one of manganese sulfate, manganese acetate, manganese nitrate or manganese chloride. The precipitant includes at least one of sodium hydroxide, lithium hydroxide, sodium carbonate or lithium carbonate. The complexing agent is ammonia water.

Step S2: Under a pure oxygen atmosphere, perform primary calcination on the nickel-manganese based precursor, where a heating rate of the primary calcination is 1°C/min to 15°C/min, temperature of the primary calcination is 300°C to 1000°C, and duration of the primary calcination is 0.5 hours to 48 hours; and then, cool a resulting product to room temperature at a cooling rate of 1°C/min to 15°C/min to obtain a spinel oxide.

In this application, the primary calcination is first performed on the nickel-manganese based precursor and then the resulting product is cooled to room temperature, which helps remove excess moisture and organic matter from the nickel-manganese based precursor, thereby reducing a probability that the excess moisture and organic matter react with the sodium source to form residual sodium impurities during a subsequent sodiation process. This is beneficial to constructing a suitable Na gradient distribution in the positive electrode material and reducing a probability of side reactions between residual sodium impurities and the electrolyte during charge and discharge, which improves the structural stability of the positive electrode material while improving purity of the positive electrode material, thereby improving the cycling performance of the electrochemical apparatus under the high temperature and the high voltage.

Step S3: Under an air atmosphere, grind and uniformly mix the spinel oxide and a sodium source, and perform secondary calcination, where a heating rate of the secondary calcination is 1°C/min to 10°C/min, temperature of the secondary calcination is 500°C to 900°C, and duration of the secondary calcination is 5 hours to 48 hours; and then, cool the mixture to room temperature at a cooling rate of 1°C/min to 10°C/min to obtain a first product.

In some implementations, the sodium source includes at least one of sodium hydroxide, sodium oxide, sodium carbonate, or sodium bicarbonate.

Step S4: Under a nitrogen atmosphere, grind and uniformly mix the first product and an aluminum source, and perform tertiary calcination, where a heating rate of the tertiary calcination is 1°C/min to 10°C/min, temperature of the tertiary calcination is 300°C to 900°C, and duration of the tertiary calcination is 0.5 hours to 12 hours; and then, cool the mixture to room temperature at a cooling rate of 1°C/min to 10°C/min to obtain a second product.

In some implementations, the aluminum source includes at least one of aluminum oxide, aluminum hydroxide, aluminum acetate, aluminum nitrate, aluminum chloride, or aluminum sulfate.

Step S5: Under an air atmosphere, grind and uniformly mix the second product and a lithium source, and perform quaternary calcination, where a heating rate of the quaternary calcination is 1°C/min to 10°C/min, temperature of the quaternary calcination is 200°C to 500°C, and duration of the quaternary calcination is 0.5 hours to 24 hours; and then, cool the mixture to room temperature at a cooling rate of 1°C/min to 10°C/min, followed by washing with deionized water, drying, and sieving, to obtain a third product.

In some implementations, the lithium source includes at least one of lithium hydroxide, lithium nitrate, lithium chloride, or lithium sulfate.

Step S6: Under an air atmosphere, grind and uniformly mix the third product and a boron source, and perform quinary calcination, where a heating rate of the quinary calcination is 1°C/min to 10°C/min, temperature of the quinary calcination is 100°C to 500°C, and duration of the quinary calcination is 1 hour to 24 hours; and then, cool the mixture to room temperature at a cooling rate of 1°C/min to 10°C/min to obtain the positive electrode material in this application.

In some implementations, the boron source includes boric acid and/or boron oxide.

### Positive electrode sheet

The positive electrode sheet includes a positive electrode current collector and a positive electrode material layer disposed on at least one surface of the positive electrode current collector. The "positive electrode material layer disposed on at least one surface of the positive electrode current collector" means that the positive electrode material layer may be disposed on one or two surfaces of the positive electrode current collector along its thickness direction. It should be noted that the "surface" herein may be an entire or partial area of the surface of the positive electrode current collector. This is not particularly limited in this application, as long as the objective of this application can be achieved. The positive electrode current collector is not particularly limited in this application, as long as the objective of this application can be achieved. For example, the positive electrode current collector may include aluminum foil, aluminum alloy foil or a composite current collector (for example, an aluminum-carbon composite current collector). The positive electrode material layer may also include the positive electrode material, a conductive agent and a binder in this application.

The binder is not particularly limited in this application, as long as the objective of this application can be achieved. For example, the binder may include, but is not limited to, a binder polymer, such as at least one of polyvinylidene fluoride, polytetrafluoroethylene, polyolefins, sodium carboxymethyl cellulose, lithium carboxymethyl cellulose, modified polyvinylidene fluoride, modified SBR rubber or polyurethane. The polyolefin binder includes at least one of polyethylene, polypropylene, polyolefin ester, polyolefin alcohol or polyacrylic acid.

The conductive agent is not particularly limited in this application, as long as the objective of this application can be achieved. For example, the conductive agent may include, but is not limited to, a carbon-based material, a metal-based material, a conductive polymer or a mixture thereof. The carbon-based material includes natural graphite, artificial graphite, carbon black, acetylene black, Ketjen black or carbon fiber. The metal-based material includes metal powder or metal fibers of copper, nickel, aluminum, silver, or the like. The conductive polymer includes a polyphenylene derivative.

Thicknesses of the positive electrode current collector and the positive electrode material layer are not particularly limited in this application, as long as the objective of this application can be achieved. For example, the thickness of the positive electrode current collector 5 µm to 20 µm, and the thickness of the single-sided positive electrode material layer is 30 µm to 120 µm.

Optionally, the positive electrode sheet may further include a conductive layer, and the conductive layer is located between the positive electrode current collector and the positive electrode material layer. Composition of the conductive layer is not particularly limited and may be a conductive layer commonly used in the art. The conductive layer includes a conductive agent and a binder. The conductive agent and the binder in the conductive layer are not particularly limited in this application, and each may be, for example, at least one of the foregoing conductive agents and binders.

### Negative electrode sheet

The negative electrode sheet includes a negative electrode current collector and a negative electrode material layer disposed on the negative electrode current collector. The negative electrode current collector may be at least one of copper foil, nickel foil, stainless steel foil, titanium foil, the carbon-based current collector, or the like, or may be any composite current collector disclosed in the prior art, for example, including, but not limited to, a current collector formed by combining the foregoing conductive foil and a polymer substrate. The negative electrode material layer includes a negative electrode material, and optionally a conductive agent, a binder and a thickener.

A specific type of negative electrode material is not specifically limited and can be selected based on a need. As an example, the negative electrode material includes, but is not limited to, at least one of natural graphite, artificial graphite, mesocarbon microbeads (MCMB), hard carbon, soft carbon, silicon, a silicon-carbon composite, SiO, Li-Sn alloy, Li-Sn-O alloy, Sn, SnO, SnO₂, spinel-structured Li₄Ti₅O₁₂, or Li-Al alloy.

The specific type of conductive agent is not specifically limited and can be selected based on a need. As an example, the conductive agent includes, but is not limited to, at least one of conductive graphite, super conductive carbon, acetylene black, carbon black, Ketjen black, carbon dots, carbon nanotubes, graphene or carbon nanofibers.

The specific type of binder is not specifically limited and can be selected based on a need. As an example, the binder includes, but is not limited to, at least one of styrene-butadiene rubber (SBR), polyvinylidene fluoride (PVDF), polytetrafluoroethylene (PTFE), polyvinyl butyral (PVB), water-based acrylic resin (water-based acrylic resin), or carboxymethyl cellulose.

The specific type of thickener is not specifically limited and can be selected based on a need. As an example, the thickener includes, but is not limited to, sodium carboxymethyl cellulose (CMC-Na).

### Electrolyte

Based on some embodiments of this application, the electrolyte includes an organic solvent, a lithium salt and an optional additive. The organic solvent in the electrolyte in this application may be any organic solvent known in the prior art that can be used as a solvent in the electrolyte. An electrolyte salt used in the electrolyte according to this application is not limited, and may be any electrolyte salt known in the prior art. The additive in the electrolyte according to this application may be any additive known in the prior art that can be used as an additive in the electrolyte. In some embodiments, the organic solvent includes, but is not limited to, ethylene carbonate (EC), propylene carbonate (PC), diethyl carbonate (DEC), ethyl methyl carbonate (EMC), dimethyl carbonate (DMC) or ethyl propionate. In some embodiments, the organic solvent includes an ether solvent, including, for example, at least one of 1,3-dioxolane (DOL) or dimethoxyethane (DME). In some embodiments, the lithium salt includes at least one of an organic lithium salt or an inorganic lithium salt. In some embodiments, the lithium salt includes, but is not limited to: lithium hexafluorophosphate (LiPF₆), lithium tetrafluoroborate (LiBF₄), lithium difluorophosphate (LiPO₂F₂), lithium bis(trifluoromethanesulfonyl)imide LiN(CF₃SO₂)₂ (LiTFSI), lithium bis(fluorosulfonyl)imide Li(N(SO₂F)₂) (LiFSI), lithium bis(oxalato)borate LiB(C₂O₄)₂ (LiBOB) or lithium difluoro(oxalato)borate LiBF₂(C₂O₄) (LiDFOB).

### Separator

A material and shape of the separator used in the electrochemical apparatus in this application are not particularly limited, and may belong to any technology disclosed in the prior art. In some embodiments, the separator includes a polymer, an inorganic substance, or the like formed by a material stable in the electrolyte in this application.

For example, the separator may include a substrate layer and a surface treatment layer. The substrate layer is a non-woven fabric, a film or a composite film with a porous structure, and a material of the substrate layer is selected from at least one of polyethylene, polypropylene, polyethylene terephthalate or polyimide, and specifically, may be selected from a polypropylene porous film, a polyethylene porous film, a polypropylene non-woven fabric, a polyethylene non-woven fabric or a polypropylenepolyethylene-polypropylene porous composite film.

A surface treatment layer is provided on at least one surface of the substrate layer, and the surface treatment layer may be a polymer layer or an inorganic layer, or a layer formed by mixing a polymer and an inorganic substance. The inorganic layer includes inorganic particles and a binder. The inorganic particles are selected from at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide or barium sulfate. The binder is selected from at least one of polyvinylidene fluoride, vinylidene fluoride-hexafluoropropylene copolymer, polyamide, polyacrylonitrile, polyacrylate, polyacrylic acid, polyacrylate salt, polyvinylpyrrolidone, polyethylene oxide, polymethyl methacrylate, polytetrafluoroethylene or polyhexafluoropropylene. The polymer layer includes a polymer, and a material of the polymer is selected from at least one of polyamide, polyacrylonitrile, acrylate polymer, polyacrylic acid, polyacrylate salt, polyvinylpyrrolidone, polyethylene oxide, polyvinylidene fluoride, or poly(vinylidene fluoride-hexafluoropropylene).

### Electrochemical apparatus

An embodiment of this application provides an electrochemical apparatus, including a housing (for example, a packaging bag) for accommodating the foregoing positive electrode sheet, separator, negative electrode sheet and electrolyte, and other components known in the electrochemical field. The preceding other components is not limited in this application. The housing is not particularly limited in this application, and may be a housing known in the art, as long as the objective of this application can be achieved. For example, an aluminum-plastic film packaging bag may be used. The type of electrochemical apparatus is not particularly limited in this application, and may include any apparatus in which an electrochemical reaction occurs. The electrochemical apparatus in this application has good kinetic performance, cycling performance and gas generation behavior under high temperature and a high voltage.

In some implementations of this application, when the electrochemical apparatus is charged and discharged at a current of 0.1 C in a voltage range of 2.8 V to 4.5 V, an obtained differential capacity-voltage (dQ/dV) curve exhibits a first oxidation peak and a first reduction peak in a range of 4.2 V to 4.5 V.

In some implementations of this application, based on the mass of the positive electrode material, peak intensity of the first oxidation peak is greater than or equal to 875 mAh/g/V, and peak intensity of the first reduction peak is greater than or equal to 875 mAh/g/V. Further, in some implementations of this application, the peak intensity of the first oxidation peak is 2900 mAh/g/V to 4100 mAh/g/V, and the peak intensity of the first reduction peak is 2535 mAh/g/V to 3830 mAh/g/V. In this way, the positive electrode material can have a higher reversible charge-discharge capacity in a high-voltage range (2.8 V to 4.5 V), thereby greatly improving the energy density of the electrochemical apparatus.

In some implementations of this application, a peak voltage of the first oxidation peak is Vo1, and a peak voltage of the first reduction peak is Vr1, where |Vo1-Vr1|≤0.145 V. Further, in some implementations of this application, |Vo1-Vr1|≤0.063 V. In some implementations of this application, |Vo1-Vr1|≥0.049 V. In this way, reversibility of the positive electrode material in the high-voltage range is better, thereby improving the cycling performance of the electrochemical apparatus under the condition of the high voltage.

In some implementations of this application, when the electrochemical apparatus is charged and discharged at a current of 0.1 C in a voltage range of 2.8 V to 4.5 V, a discharging curve in the obtained capacity-voltage curve exhibits a plateau in a range of 4.2 V to 4.5 V, a capacity of the discharging curve in the range of 4.2 V to 4.5 V is Q1, and a capacity of the discharging curve in the range of 3.0 V to 4.5 V is Qt, where 0.175≤Q1/Qt≤0.345. Further, in some implementations of this application, 0.269≤Q1/Qt≤0.331. For example, a value obtained by dividing Q1 by Qt (Q1/Qt) may be 0.175, 0.18, 0.185, 0.19, 0.195, 0.2, 0.205, 0.21, 0.215, 0.22, 0.225, 0.23, 0.235, 0.24, 0.245, 0.25, 0.255, 0.26, 0.265, 0.269, 0.27, 0.275, 0.28, 0.285, 0.29, 0.3, 0.32, 0.331, 0.335, 0.34, or 0.345 or any value within a range composed of any preceding values. In this way, the positive electrode material can have a higher reversible charge-discharge capacity in the high-voltage range, thereby greatly improving the energy density of the electrochemical apparatus.

In some implementations of this application, a differential capacity-voltage (dQ/dV) curve exhibits a second oxidation peak and a second reduction peak in a range of 3.6 V to 4.0 V.

In some implementations of this application, an X-ray diffraction pattern of the positive electrode material exhibits characteristic diffraction peaks in 2θ ranges of 17° to 20°, 35° to 38°, and 42° to 46°.

In some implementations of this application, unit cell parameter a of the positive electrode material satisfies a condition: 2.875 Å≤a≤3.125Å.

In some implementations of this application, unit cell parameter c of the positive electrode material satisfies a condition: 14.345 Å≤c≤15.15Å.

In some implementations of this application, the positive electrode material has a layered crystal structure belonging to R-3m space group.

Electronic apparatus

The foregoing electrochemical apparatus is applied to the electronic apparatus to supply power to a load in the electronic apparatus. In addition, the foregoing electrochemical apparatus has good kinetic performance, cycling performance and gas generation behavior under high temperature and a high voltage, which helps prolong the service life of the electronic apparatus. The electronic apparatus may include, but is not limited to, notebook computers, pen-input computers, mobile computers, e-book players, portable phones, portable facsimile machines, portable copiers, portable printers, headmounted stereo headphones, video recorders, liquid crystal televisions, portable cleaners, portable CD players, mini compact discs, transceivers, electronic organizers, calculators, memory cards, portable audio recorders, radios, backup power supplies, electric motors, automobiles, motorcycles, electric assist bicycles, bicycles, lighting fixtures, toys, game consoles, clocks, power tools, flashlights, cameras, large-capacity household storage batteries, and lithium-ion capacitors.

### Example 1

### <Preparation of positive electrode material>

Step S1: Prepare a first aqueous solution containing NiSO₄ and MnSO₄ based on a molar ratio of Ni to Mn (50:50); under a nitrogen atmosphere, mix the first aqueous solution with a precipitant, namely NaOH solution, and a complexing agent, namely ammonia water, for reaction, and adjust an ammonia water concentration in the reaction system to 1 mol/L and pH of the reaction system to 12.5, where the total reaction time is 48 hours; and after the reaction, filter a resulting solution, followed by water washing and drying to obtain a nickel-manganese based precursor.

Step S2: Under a pure oxygen atmosphere, heat the nickel-manganese based precursor to 500°C at a rate of 5°C/min, perform primary calcination for 10 hours, and then cool a resulting mixture to room temperature at a rate of 5°C/min to obtain a spinel oxide.

Step S3: Based on a ratio of a total molar amount of Ni and Mn to a molar amount of Na, where TM (Ni+Mn)∶Na=1∶1.08, grind and uniformly mix spinel oxide and sodium hydroxide, then heat the mixture to 825°C at a rate of 5°C/min under an air atmosphere, perform secondary calcination for 12 hours, and then cool the mixture to room temperature at a rate of 5°C/min to obtain a first product.

Step S4: Based on a ratio of the total molar amount of Ni and Mn to a molar amount of Al, where TM (Ni+Mn)∶Al=1∶0.03, grind and uniformly mix the first product and aluminum oxide, introduce a nitrogen atmosphere, then heat the mixture to 800°C at a rate of 3°C/min, perform tertiary calcination, hold the mixture at the temperature for 5 hours, and then cool the mixture to room temperature at a rate of 5°C/min to obtain a second product.

Step S5: Based on a ratio of the total molar amount of Ni and Mn to a molar amount of Li, where TM (Ni+Mn)∶Li=1∶5, fully mix the second product and a lithium source (the lithium source is a mixture of lithium hydroxide and lithium nitrate at a molar ratio of 1∶3), heat a resulting mixture to 355°C at a rate of 3°C/min under an air atmosphere, perform quaternary calcination for 5 hours, and then cool the mixture to room temperature at a rate of 5°C/min, followed by washing with deionized water, drying and sieving, to obtain the third product.

Step S6: Based on a ratio of the total molar amount of Ni and Mn to a molar amount of B, where TM (Ni+Mn)∶B=1∶0.03, fully mix the third product with boric acid, heat a resulting mixture to 200°C at a rate of 5°C/min under an air atmosphere, perform quinary calcination for 10 hours, and then cool the mixture to room temperature at a rate of 5°C/min to obtain the positive electrode material.

### <Preparation of positive electrode sheet>

A binder, namely polyvinylidene fluoride (PVDF), a conductive agent, namely conductive carbon black (Super P), and the positive electrode material were mixed at a mass ratio of 2:2:96 uniformly, and N-methyl-2-pyrrolidone (NMP) was added as a solvent to obtain a positive electrode slurry with a solid content of 70wt%; the positive electrode slurry was uniformly applied onto a surface of a 10 µm thick positive electrode current collector, namely aluminum foil, followed by drying at 120°C for 1 hour to obtain a positive electrode sheet with a 40 µm thick positive electrode material layer applied on one side; the foregoing steps were repeated on another surface of the aluminum foil to obtain a positive electrode sheet with positive electrode material layers applied on both sides; and the positive electrode sheet was dried under vacuum at 120°C for 1 hour, followed by cold pressing, cutting, and tab welding to obtain a positive electrode sheet with dimensions of 74 mm×867 mm, where surface density of one side of the positive electrode material layer was 14 mg/cm².

### <Preparation of negative electrode sheet>

A negative electrode material, namely graphite, a thickener, namely sodium carboxymethyl cellulose (CMC-Na), and a binder, namely styrene-butadiene rubber (SBR) were mixed at a mass ratio of 96:2:2, deionized water was added, and a resulting mixture was stirred and mixed uniformly to obtain a negative electrode slurry, where a solid content of the negative electrode slurry was 75wt%; the negative electrode slurry was uniformly applied onto one surface of a 12 µm thick negative electrode current collector, namely copper foil, the negative electrode current collector was dried at 120°C to obtain a negative electrode sheet with a 80 µm thick negative electrode material layer applied on one side; the foregoing steps were repeated on another surface of the copper foil to obtain a negative electrode sheet with negative electrode material layers applied on both sides; and the negative electrode sheet was dried under vacuum at 120°C for 1 hour, followed by cold pressing, cutting, and slitting to obtain a negative electrode sheet with dimensions of 78 mm×875 mm.

### <Preparation of electrolyte>

In an argon-filled glove box with water content less than 10 ppm, non-aqueous organic solvents, namely ethylene carbonate (EC), propylene carbonate (PC), and diethyl carbonate (DEC), were mixed at a mass ratio of 1:1:1, then a lithium salt LiPF₆ was added, and the resulting solution was mixed uniformly to obtain an electrolyte. Finally, fluoroethylene carbonate (FEC), 1,3-propane sultone (PS), adiponitrile (ADN) and 1,3,6-hexanetricarbonitrile (HTCN) were added to the electrolyte and the mixture was mixed uniformly. Based on the total mass of the electrolyte, a mass percentage of LiPF₆ was 12.5%, a mass percentage of FEC was 5%, a mass percentage of PS was 2%, a mass percentage of ADN was 1%, a mass percentage of HTCN was 2%, and the non-aqueous organic solvent accounted for the remainder.

### <Preparation of separator>

A 9 µm thick porous polyethylene polymer film with a porosity of 40% was used as the separator.

### <Preparation of lithium-ion pouch battery>

The positive electrode sheet, separator, and negative electrode sheet prepared above were stacked, so that the separator was sandwiched between the positive electrode sheet and the negative electrode sheet for isolation, and the positive electrode sheet, separator, and negative electrode sheet were wound to obtain an electrode assembly. After tabs were welded, the electrode assembly was placed in an aluminum-plastic film packaging bag, and after drying, the electrolyte was injected, followed by processes such as vacuum sealing, standing, formation (upper limit voltage for formation: 4.35 V; formation temperature: 85°C; formation standing time: 2 hours), degassing, and edge trimming, to obtain the lithium-ion pouch battery.

### <Preparation of coin-type lithium-ion battery>

The positive electrode sheet was cut into a circular disc with a diameter (Φ) of 14 mm to serve as a working electrode, a metallic lithium disc with a diameter (Φ) of 18 mm was used as a reference electrode, the positive electrode sheet and the metallic lithium disc were separated by a separator with a diameter (Φ) of 18 mm, and an appropriate amount of electrolyte was added dropwise, followed by assembling to obtain the coin-type lithium-ion battery.

### Examples 2 to 8

Conditions and preparation methods in Examples 2 to 8 and Example 1 were the same except that an addition amount of aluminum oxide in step S4 of the preparation of the positive electrode material and an addition amount of boric acid in step S6 were adjusted. The foregoing specific preparation parameters can be adjusted accordingly based on Table 2.

### Examples 9 to 13

Conditions and preparation methods in Examples 9 to 13 and Example 1 were the same except that quaternary calcination in step S5 of the preparation of the positive electrode material was performed for 24 hours, 10 hours, 3 hours, 1 hour, and 0.5 hours respectively, to adjust molar percentages of Na in positive electrode materials. The foregoing specific preparation parameters can be adjusted accordingly based on Table 1.

### Comparative Examples 1 to 4

Conditions and preparation methods in Comparative Examples 1 to 4 and Example 1 were the same except that quaternary calcination in step S5 of the preparation of the positive electrode material were performed for 48 hours, 0.2 hours, 36 hours, and 0.1 hours respectively, so that values obtained by dividing c_{1Na} by c_{2Na} (c_{1Na}/c_{2Na}) and values obtained by dividing c_{3Na} by c_{2Na} (c_{3Na}/c_{2Na}) did not fall within the range in this application. The foregoing specific preparation parameters can be adjusted accordingly based on Table 1.

### Comparative Example 5

Conditions and preparation methods in Comparative Example 5 and Example 1 were the same except that in step S2 to step S6 during the preparation of the positive electrode material, based on the ratio of the total molar amount of Ni and Mn to the molar amount of Li (TM (Ni+Mn)∶Li=1∶1.05), the nickel-manganese based precursor and lithium carbonate were mixed uniformly, then heated to 825°C at a rate of 5°C/min under an air atmosphere, calcined for 12 hours, then cooled to room temperature at a rate of 5°C/min, and finally washed with deionized water, dried and sieved to obtain positive electrode materials. The foregoing specific preparation parameters can be adjusted accordingly based on Table 1.

Test method for lithium-ion pouch battery

### (1) Test of thickness expansion rate after storage at 85°C

The lithium-ion pouch battery was charged at a constant current of 1.5 C to 4.35 V under 25°C, and then charged at a constant voltage of 4.35 V until the current reached 0.05 C, so that the lithium-ion battery reached a fully charged state. The fully charged lithium-ion battery was put in a thermostatic chamber at 85°C for storage for 24 hours, a thickness change of the lithium-ion pouch battery was measured with a micrometer, an initial thickness of the lithium-ion pouch battery before storage was defined as H0, and a thickness after storage was defined as H1. Thickness expansion rate=(H1-H0)/H0×100%.

### (2) Capacity retention rate test under cycling at 45°C

The lithium-ion pouch battery was put in a thermostatic chamber at 45°C, charged at a constant current of 1.5 C to 4.35 V, then charged at a constant voltage of 4.35 V until the current reached 0.05 C, then discharged at a constant current of 4 C to 3.0 V. This was one charge-discharge cycle. The lithium-ion pouch battery was charged and discharged for 500 cycles in the foregoing method, and discharge capacities of the lithium-ion pouch battery in the first cycle and the 500^{th} cycle were recorded. Cycle capacity retention rate=discharge capacity in 500^{th} cycle/discharge capacity in the first cycle×100%.

### Test method for coin-type lithium-ion battery

The coin-type battery was charged at a constant current of 0.1 C in a voltage range of 2.8 V to 4.5 V to reach 4.5 V at 25°C, then charged at a constant voltage of 4.5 V until the current reached 50 µA, and a charging capacity of the coin-type battery was recorded. The coin-type battery was then discharged at a constant current of 0.1 C until a lower voltage limit reached 2.8 V, and a relationship curve of the capacity and the voltage and the differential capacity-voltage (dQ/dV) curve were plotted. Peak intensity and a peak voltage Vo1 of the first oxidation peak, and peak intensity and a peak voltage Vr1 of the first reduction peak were obtained based on the differential capacity-voltage (dQ/dV) curve. A capacity Q1 in the voltage range of 4.2 V to 4.5 V and a capacity Qt in the voltage range of 3.0 V to 4.5 V can be obtained based on the relationship curve of the capacity and the voltage. Charging specific capacity of positive electrode material=charging capacity of coin-type battery/mass of positive electrode material. In addition, with other conditions unchanged, the coin-type battery was tested at a current of 1 C to obtain a capacity-voltage curve, and a ratio of capacities under 1 C and 0.1 C was calculated to reflect rate performance of the coin-type battery.

### Test of positive electrode material and positive electrode sheet

Preparation of positive electrode sheet sample: The electrochemical apparatus was discharged to 2.8 V at a current density of 0.1 C, and then disassembled in a glove box, the positive electrode sheet was removed, the positive electrode sheet was cut into small circular discs, and then soaked into a solvent of DMC for 5 minutes, and the positive electrode sheet was air-dried for testing.

### (1) X-ray diffraction test:

The positive electrode material and positive electrode sheet were characterized by an X-ray powder diffractometer (XRD, model: Bruker D8 ADVANCE) with Cu Kα as a target. A voltage and current were 40 kV and 40 mA, and a scanning angle ranged from 10° to 80°. XRD patterns of the positive electrode materials obtained from testing were subjected to phase matching to obtain information on a crystal phase structure and unit cell parameters of the positive electrode material.

### (2) Scanning electron microscope test:

Samples of positive electrode materials and positive electrode sheets were tested under a scanning electron microscope (SEM, model: Thermo Scientific FEI-Apreo S, acceleration voltage: 0.2 kV to 30 kV)). Images of the positive electrode material and its cross section were captured at magnifications of 1000, 3000, 5000, 10000 and 30000 times respectively.

### (3) Time-of-flight secondary ion mass spectrometry test:

A time-of-flight secondary ion mass spectrometer (model: PHI nanoTOFII Time-of-Flight SIMS) was used to test content distribution of Li, Ni, Mn, M, Al, Na, B and other elements in positive electrode sheets at different etching depths.

### (4) Electron probe micro-analyzer (EPMA) test:

The positive electrode sheet was cut with a triple ion beam to obtain a flat cross section exposing an internal structure of the positive electrode material. A cross section of any positive electrode material particle was selected, and an electron probe micro-analyzer (EPMA, model: JXA-8230) was used to measure contents of Ni, Mn, M, Al, Na, B and other elements in a first region within 5 nm from a surface of the positive electrode material particle, a second region at a distance of 20 nm to 100 nm from the surface of the particle, and a third region at a distance of more than 1000 nm from the surface of the particle in the positive electrode material particles.

### (5) Inductively coupled plasma optical emission spectrometer (ICP-OES) test:

The ICP-OES was used to measure contents of Na, Li, Ni, Mn, Al, B and other elements in the positive electrode material.

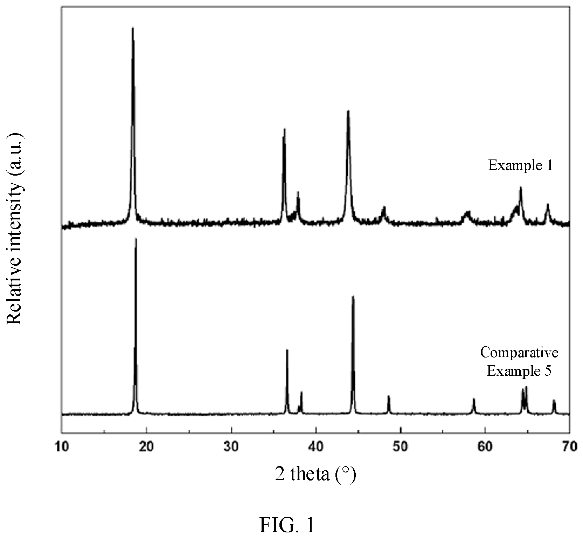

FIG. 1 is an X-ray diffraction pattern of positive electrode materials in Comparative Example 5 and Example 1. It can be learned from FIG. 1 that the X-ray diffraction pattern of the positive electrode material in this application exhibits characteristic diffraction peaks in 2θ ranges of 17° to 20°, 35° to 38°, and 42° to 46°, which correspond to characteristic peaks of crystal planes 003, 101, and 104 of layered lithium nickel manganese composite oxide, where a corresponding space group is R-3m. The larger the full width at half maximum of the characteristic peaks in the X-ray diffraction pattern, the smaller the grain size of the material. The full width at half maximum of the characteristic peaks of the positive electrode material in this application is higher than that of the conventional positive electrode material in Comparative Example 5, indicating that the positive electrode material in this application has finer grains.

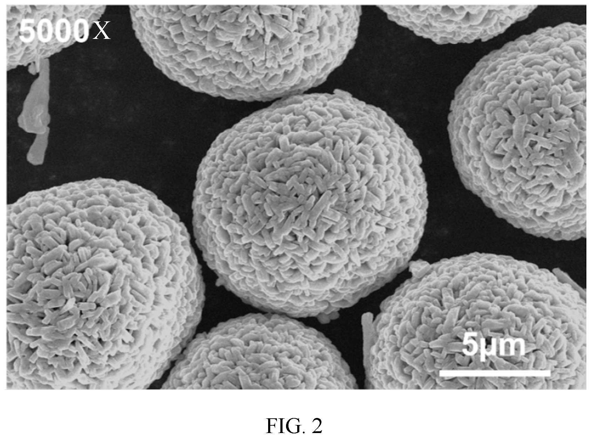

FIG. 2 is an SEM image of a positive electrode material in Example 1. It can be learned from FIG. 2 that the positive electrode material in Example 1 presents micronsized secondary particles assembled from slender primary nanocrystalline grains.

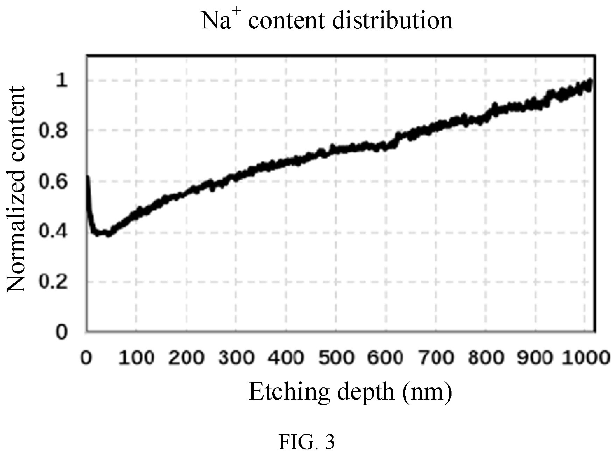

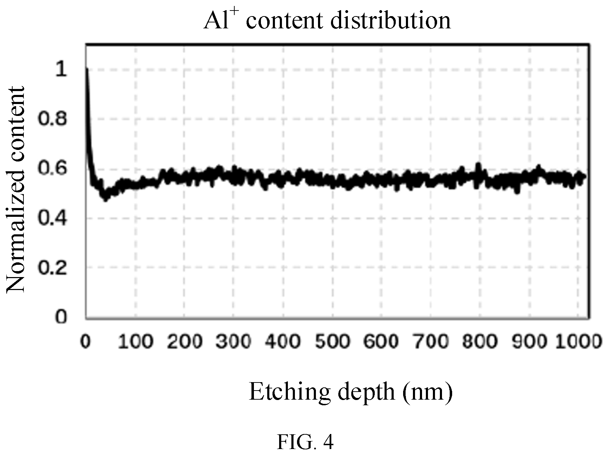

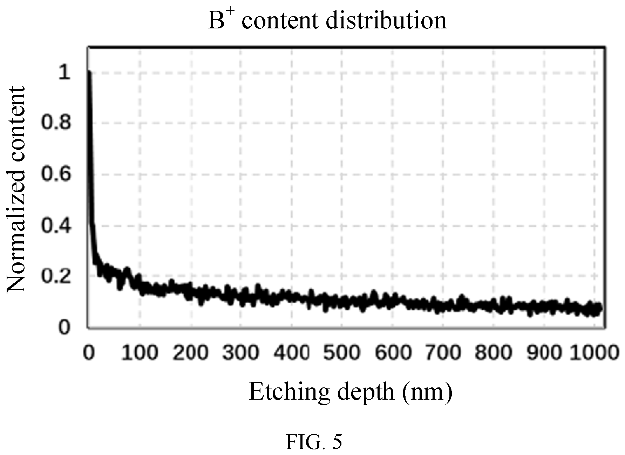

FIG. 3 is an EPMA image of Na in a positive electrode material in Example 1. FIG. 4 is an EPMA image of Al in a positive electrode material in Example 1. FIG. 5 is an EPMA image of B in a positive electrode material in Example 1. It can be learned from FIG. 3 to FIG. 5 that Na contents in the positive electrode material in Example 1 shows a trend of first decreasing and then increasing with the increase of etching depth, while Al and B contents gradually decrease with the increase of etching depth. The first region within 5 nm from the surface of the positive electrode material and the second region at a distance of 20 nm to 100 nm from the surface of the positive electrode material are both surface layers of the positive electrode material, and the third region at a distance of more than 1000 nm from the surface of the positive electrode material is inside the positive electrode material. The contents of Na, Al, and B form a concentration gradient distribution of multiple elements from the surface of the positive electrode to the interior of the positive electrode material, which induces the formation of oxygen defects, reduces the interfacial reactivity of high-activity metal ions and oxygen ions on the surface with the electrolyte, improves the structural stability, interfacial stability, and lithium-ion diffusion ability of the positive electrode material, and is beneficial to improving the cycling performance and storage performance of the lithium-ion battery under the high temperature and the high voltage.

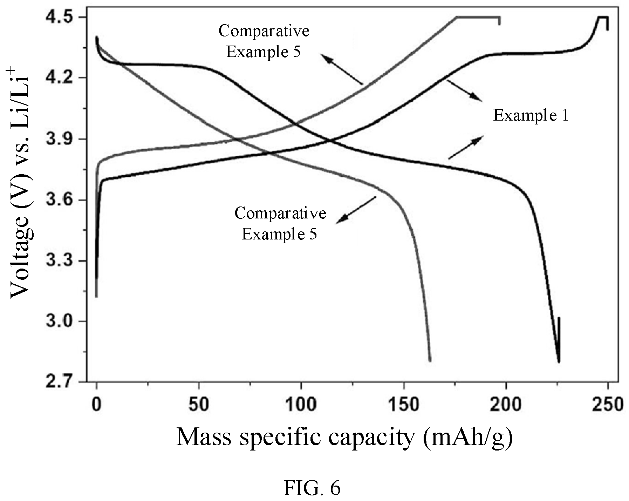

FIG. 6 shows charge-discharging curves of coin-type lithium-ion batteries in Comparative Example 5 and Example 1. It can be learned from FIG. 6 that a discharging curve of the coin-type battery in Comparative Example 5 exhibits no obvious plateau in a range of 4.2 V to 4.5 V, while a discharging curve of the coin-type battery in Example 1 exhibits a plateau in the range of 4.2 V to 4.5 V, indicating that the positive electrode material in this application has a high reversible charge-discharge capacity in the high-voltage ranges, and therefore, the lithium-ion battery can have higher energy density.

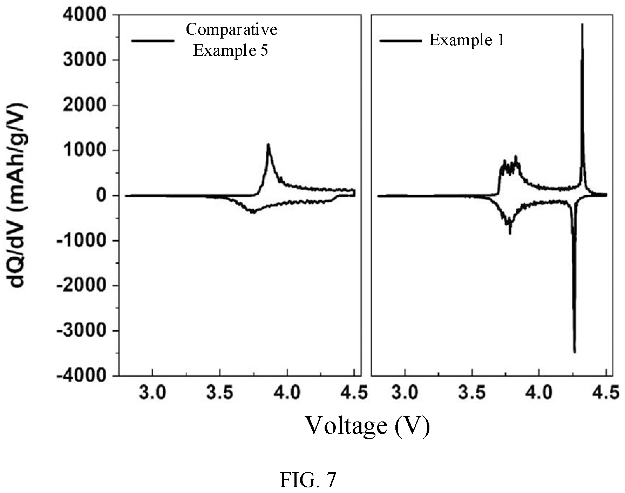

FIG. 7 shows differential capacity-voltage curves of coin-type lithium-ion batteries in Comparative Example 5 and Example 1. It can be learned from FIG. 7 that the differential capacity-voltage (dQ/dV) curve of the coin-type battery in Comparative Example 5 exhibits no oxidation peak or reduction peak in a range of 4.2 V to 4.5 V, while the differential capacity-voltage (dQ/dV) curve of the coin-type battery in Example 1 exhibits a first oxidation peak and a first reduction peak in the range of 4.2 V to 4.5 V, and a second oxidation peak and a second reduction peak in a range of 3.6 V to 4.0 V.

Test data of Examples 1 to 13 and Comparative Examples 1 to 5 are recorded in Tables 1 to 4.

**Table 1**

| Group | Positive electrode material | | | | | | | | |
|---|---|---|---|---|---|---|---|---|---|
| | Ni (%) | Mn (%) | Li (%) | Na (%) | c_{1Na} (%) | c_{2Na} (%) | c_{3Na} (%) | c_{1Na}/c_{2Na} | c_{3Na}/c_{2Na} |
| Example 1 | 50 | 50 | 92.3 | 7.7 | 5.31 | 3.36 | 8.67 | 1.58 | 2.58 |
| Example 2 | 50 | 50 | 92.7 | 7.3 | 3.44 | 2.37 | 5.50 | 1.45 | 2.32 |
| Example 3 | 50 | 50 | 92.6 | 7.4 | 4.28 | 2.89 | 6.91 | 1.48 | 2.39 |
| Example 4 | 50 | 50 | 92.4 | 7.6 | 4.76 | 3.11 | 7.65 | 1.53 | 2.46 |
| Example 5 | 50 | 50 | 91.7 | 8.3 | 7.03 | 3.66 | 10.14 | 1.92 | 2.77 |
| Example 6 | 50 | 50 | 92.5 | 7.5 | 4.41 | 2.94 | 7.29 | 1.5 | 2.48 |
| Example 7 | 50 | 50 | 92.6 | 7.4 | 4.12 | 3.03 | 6.12 | 1.36 | 2.02 |
| Example 8 | 50 | 50 | 89.3 | 10.7 | 15.34 | 5.13 | 15.18 | 2.99 | 2.96 |
| Example 9 | 50 | 50 | 98.8 | 1.2 | 0.37 | 0.33 | 0.50 | 1.11 | 1.52 |
| Example 10 | 50 | 50 | 94.6 | 5.4 | 2.36 | 1.87 | 3.33 | 1.26 | 1.78 |
| Example 11 | 50 | 50 | 91.4 | 8.6 | 5.57 | 2.73 | 6.03 | 2.04 | 2.21 |
| Example 12 | 50 | 50 | 90.1 | 9.9 | 9.30 | 3.51 | 10.04 | 2.65 | 2.86 |
| Example 13 | 50 | 50 | 85.2 | 14.8 | 14.87 | 4.99 | 14.92 | 2.98 | 2.99 |
| Comparative Example 1 | 50 | 50 | 99.1 | 0.9 | 0.34 | 0.33 | 0.51 | 1.04 | 1.54 |
| Comparative Example 2 | 50 | 50 | 84.3 | 15.7 | 15.22 | 4.99 | 14.77 | 3.05 | 2.96 |
| Comparative Example 3 | 50 | 50 | 99.2 | 0.8 | 0.38 | 0.33 | 0.49 | 1.14 | 1.48 |
| Comparative Example 4 | 50 | 50 | 83.5 | 16.5 | 15.07 | 4.99 | 15.62 | 3.02 | 3.13 |
| Comparative Example 5 | 50 | 50 | 100 | / | / | / | / | / | / |

| | | | | | | | | | |
|---|---|---|---|---|---|---|---|---|---|
| Note: "/" in Table 1 indicates that the corresponding preparation parameter or substance does not exist. | | | | | | | | | |

**Table 2**

| Group | Positive electrode material | | | | | | | |
|---|---|---|---|---|---|---|---|---|
| | Al (%) | c_{1A1} | c_{2A1} | c_{1A1}/c_{2A1} | B (%) | c_{1B} | c_{2B} | c_{1B}/c_{2B} |
| Example 1 | 3 | 6.15 | 2.82 | 2.18 | 3 | 14.85 | 2.69 | 5.52 |
| Example 2 | 0.05 | 0.069 | 0.014 | 4.93 | 0.05 | 0.21 | 0.011 | 19.09 |
| Example 3 | 0.5 | 1.12 | 0.29 | 3.86 | 0.5 | 2.57 | 0.16 | 16.06 |
| Example 4 | 1 | 3.04 | 0.92 | 3.30 | 1 | 5.3 | 0.36 | 14.72 |
| Example 5 | 5 | 9.81 | 4.63 | 2.12 | 5 | 19.9 | 3.97 | 5.01 |
| Example 6 | 3 | 3.24 | 2.87 | 1.13 | / | / | / | / |
| Example 7 | / | / | / | / | 3 | 5.83 | 2.89 | 2.02 |
| Example 8 | / | / | / | / | / | / | / | / |
| Example 9 | 3 | 7.76 | 2.63 | 2.95 | 3 | 19.08 | 1.51 | 12.64 |
| Example 10 | 3 | 6.85 | 2.78 | 2.46 | 3 | 18.41 | 1.64 | 11.23 |
| Example 11 | 3 | 5.87 | 2.85 | 2.06 | 3 | 13.79 | 1.87 | 7.37 |
| Example 12 | 3 | 5.46 | 2.93 | 1.86 | 3 | 12.36 | 2.05 | 6.03 |
| Example 13 | 3 | 4.81 | 3.04 | 1.58 | 3 | 11.62 | 2.26 | 5.14 |
| Comparative Example 1 | 3 | 8.47 | 2.48 | 3.42 | 3 | 19.31 | 1.48 | 13.05 |
| Comparative Example 2 | 3 | 4.65 | 2.28 | 2.04 | 3 | 10.48 | 2.34 | 4.48 |
| Comparative Example 3 | 3 | 7.76 | 2.93 | 2.65 | 3 | 19.53 | 1.41 | 13.85 |
| Comparative Example 4 | 3 | 4.81 | 2.48 | 1.94 | 3 | 10.27 | 2.43 | 4.23 |
| Comparative Example 5 | / | / | / | / | / | / | / | / |

| | | | | | | | | |
|---|---|---|---|---|---|---|---|---|
| Note: "/" in Table 2 indicates that the corresponding preparation parameter or substance does not exist. | | | | | | | | |

**Table 3**

| Group | Positive electrode material | | | | | | |
|---|---|---|---|---|---|---|---|
| | a (Å) | c (Å) | Vol (V) | Q1/Qt | \|Vo1-Vr1\| (V) | Peak intensity of first oxidation peak (mAh/g/V) | Peak intensity of first reduction peak (mAh/g/V) |
| Example 1 | 2.8989 | 14.5129 | 4.321 | 0.319 | 0.056 | 3836 | 3480 |
| Example 2 | 2.8964 | 14.4691 | 4.322 | 0.331 | 0.049 | 3987 | 3575 |
| Example 3 | 2.8971 | 14.4869 | 4.324 | 0.328 | 0.051 | 3916 | 3504 |
| Example 4 | 2.8973 | 14.5075 | 4.327 | 0.324 | 0.054 | 3871 | 3491 |
| Example 5 | 2.8995 | 14.5267 | 4.326 | 0.269 | 0.056 | 3592 | 3189 |
| Example 6 | 2.8975 | 14.4853 | 4.325 | 0.325 | 0.055 | 3856 | 3486 |
| Example 7 | 2.8974 | 14.4772 | 4.327 | 0.328 | 0.057 | 3849 | 3482 |
| Example 8 | 2.9019 | 14.5916 | 4.328 | 0.336 | 0.063 | 3984 | 3529 |
| Example 9 | 2.8813 | 14.3569 | 4.327 | 0.291 | 0.059 | 2896 | 2535 |
| Example 10 | 2.8893 | 14.4418 | 4.325 | 0.315 | 0.058 | 3127 | 2792 |
| Example 11 | 2.9057 | 14.5695 | 4.319 | 0.322 | 0.055 | 3928 | 3572 |
| Example 12 | 2.9108 | 14.5865 | 4.317 | 0.329 | 0.053 | 4012 | 3659 |
| Example 13 | 2.9082 | 14.5989 | 4.315 | 0.331 | 0.051 | 4106 | 3829 |
| Comparative Example 1 | 2.8804 | 14.3521 | 4.328 | 0.289 | 0.060 | 2885 | 2527 |
| Comparative Example 2 | 2.9097 | 14.6028 | 4.314 | 0.333 | 0.055 | 4116 | 3858 |
| Comparative Example 3 | 2.8784 | 14.3428 | 4.330 | 0.287 | 0.061 | 2864 | 2512 |
| Comparative Example 4 | 2.9127 | 14.6125 | 4.313 | 0.338 | 0.047 | 4121 | 3874 |
| Comparative Example 5 | 2.8758 | 14.1925 | / | 0.145 | / | / | / |

| | | | | | | | |
|---|---|---|---|---|---|---|---|
| Note: "/" in Table 3 indicates that the corresponding preparation parameter or substance does not exist. | | | | | | | |

**Table 4**

| Group | Performance test | | |
|---|---|---|---|
| | Thickness expansion rate after storage at 85°C (%) | Capacity retention rate under cycling at 45°C (%) | Rate at 1 C/0.1 C (%) |
| Example 1 | 9.4 | 91.4 | 94.1 |
| Example 2 | 23.5 | 76.7 | 93.7 |
| Example 3 | 18.7 | 82.5 | 93.8 |
| Example 4 | 11.5 | 87.6 | 93.9 |
| Example 5 | 6.2 | 93.5 | 94.2 |
| Example 6 | 19.1 | 84.8 | 93.9 |
| Example 7 | 15.6 | 86.1 | 93.8 |
| Example 8 | 32.2 | 74.3 | 93.6 |
| Example 9 | 21.4 | 80.7 | 93.3 |
| Example 10 | 13.5 | 87.9 | 93.5 |
| Example 11 | 11.7 | 89.6 | 94.0 |
| Example 12 | 13.3 | 87.5 | 93.9 |
| Example 13 | 17.6 | 84.7 | 93.8 |
| Comparative Example 1 | 41.4 | 65.7 | 91.9 |
| Comparative Example 2 | 38.6 | 69.7 | 92.4 |
| Comparative Example 3 | 42.2 | 64.4 | 91.7 |
| Comparative Example 4 | 39.3 | 68.3 | 92.2 |
| Comparative Example 5 | 51.6 | 62.4 | 91.2 |

It can be learned from Tables 1 to 4, Examples 1 to 13 and Comparative Examples 1 to 5 that, when the positive electrode material satisfies conditions: 1.1≤c_{1Na}/c_{2Na}≤3 and 1.5≤c_{3Na}/c_{2Na}≤3, due to the design of Na concentration gradient distribution, the interfacial reactivity between oxygen on the surface of the positive electrode material and the electrolyte is reduced, and the higher Na content in the first region of the surface layer of the positive electrode material and the appropriate Na content in the second region can better support the lattice of the first region and the second region of the surface layer after delithiation. Combined with the presence of a large amount of Na in the third region inside the positive electrode material, the lattice stability of the third region inside the positive electrode material after delithiation can be further improved, thereby better inhibiting structural phase transition of the surface layer of the positive electrode material, and further improving the gas generation of the lithium-ion battery after high-temperature storage and its high-temperature cycling performance.

It can be learned from Examples 1 to 13 and Comparative Example 5 that compared with conventional positive electrode materials containing no Na, Al, or B, in this application, an appropriate amount of at least one of Na, Al, or B is added to the positive electrode material, which improves the cycling performance, storage performance, and kinetic performance (charge-discharge rate) of the lithium-ion battery under the high temperature and the high voltage.

It can be learned from Examples 1 to 8 that compared with positive electrode materials with no Al or B concentration gradient distribution constructed, in this application, the positive electrode material in which the concentrations of Al and B decrease gradually from the surface to the interior is constructed, which reduces the interfacial reactivity between high-activity metal ions and oxygen ions on the surface and the electrolyte, improves the structural stability and interfacial stability of the material, and is beneficial to reducing the thickness expansion rate of the battery under the condition of the high temperature and the high voltage, thereby improving the capacity retention rate of the lithium-ion battery under cycling, and improving the safety and cycling performance of the lithium-ion battery.

The foregoing embodiments are merely intended to describe the technical solutions of this application, but not intended to constitute any limitation. Although this application is described in detail with reference to the foregoing embodiments, a person of ordinary skill in the art should understand that modifications or equivalent replacements can be made to the technical solutions of this application, without departing from the spirit and scope of the technical solutions of this application.

## Claims

1. A positive electrode material, wherein the positive electrode material comprises a lithium nickel manganese composite oxide, the positive electrode material comprises a first region within 5 nm from a surface of the positive electrode material, a second region at a distance of 20 nm to 100 nm from the surface of the positive electrode material, and a third region at a distance of more than 1000 nm from the surface of the positive electrode material; and
the positive electrode material comprises Na, and based on a total molar amount of Ni and Mn in the first region, a molar percentage of Na in the first region is c_{1Na}; based on a total molar amount of Ni and Mn in the second region, a molar percentage of Na in the second region is c_{2Na}; and based on a total molar amount of Ni and Mn in the third region, a molar percentage of Na in the third region is c_{3Na}; wherein 1.1≤c_{1Na}/c_{2Na}≤3, and 1.5≤c_{3Na}/c_{2Na}≤3.

2. The positive electrode material according to claim 1, wherein the positive electrode material satisfies at least one of the following characteristics:
(1) $0.5 % \leq {c}_{1 Na} \leq 15 % ;$
(2) $0.3 % \leq {c}_{2 Na} \leq 5 % ;$ or
(3) $0.5 % \leq {c}_{3 Na} \leq 15 % .$

3. The positive electrode material according to claim 1 or 2, wherein the positive electrode material comprises Al, and based on the total molar amount of Ni and Mn in the first region, a molar percentage of Al in the first region is c_{1Al}; and based on the total molar amount of Ni and Mn in the second region, a molar percentage of Al in the second region is c_{2Al}; wherein 1.1≤c_{1Al}/c_{2Al}≤5.

4. The positive electrode material according to claim 3, wherein the positive electrode material satisfies at least one of the following characteristics:
(1) $0.05 % \leq {c}_{1 A 1} \leq 10 % ;$ or
(2) $0.01 % \leq {c}_{2 A 1} \leq 5 % .$

5. The positive electrode material according to any one of claims 1 to 4, wherein the positive electrode material comprises B, and based on the total molar amount of Ni and Mn in the first region, a molar percentage of B in the first region is c_{1B}; and based on the total molar amount of Ni and Mn in the second region, a molar percentage of B in the second region is c_{2B}, wherein 2≤c_{1B}/c_{2B}≤20.

6. The positive electrode material according to claim 5, wherein the positive electrode material satisfies at least one of the following characteristics:
(1) $0.2 % \leq {c}_{1 B} \leq 20 % ;$ or
(2) $0.01 % \leq {c}_{2 B} \leq 4 % .$

7. The positive electrode material according to any one of claims 1 to 6, wherein the positive electrode material satisfies at least one of the following characteristics:
(1) based on a total molar amount of Ni and Mn in the positive electrode material, a molar percentage of Na in the positive electrode material is 1% to 15%;
(2) based on a total molar amount of Ni and Mn in the positive electrode material, a molar percentage of Al in the positive electrode material is 0.05% to 5%; or
(3) based on a total molar amount of Ni and Mn in the positive electrode material, a molar percentage of B in the positive electrode material is 0.05% to 5%.

8. The positive electrode material according to any one of claims 1 to 7, wherein the positive electrode material comprises Liₓ₁Naₓ₂Ni_{y1}Mn_{y2}M_{y3}O_{2±m}Rₙ, wherein M comprises at least one of K, Mg, Ca, Sc, Ti, V, Cr, Fe, Cu, Co, Al, Zn, Ga, Ge, Sr, Y, Zr, Nb, Mo, Ag, In, Sn, Sb, Ba, La, Ce, Hf, Ta, W, Pb, or Bi; and R comprises at least one of F, Cl, Br, I, S, Se, or N; wherein 0.85≤x1≤1, 0.01≤x2≤0.15, 0.45≤y1≤0.95, 0.05≤y2≤0.55, 0≤y3≤0.1, 0≤m≤0.15, and 0≤n≤0.15.

9. An electrochemical apparatus, comprising a positive electrode sheet, wherein the positive electrode sheet comprises the positive electrode material according to any one of claims 1 to 8.

10. The electrochemical apparatus according to claim 9, wherein when the electrochemical apparatus is charged and discharged at a current of 0.1 C in a voltage range of 2.8 V to 4.5 V, an obtained differential capacity-voltage dQ/dV curve exhibits a first oxidation peak and a first reduction peak in a range of 4.2 V to 4.5 V.

11. The electrochemical apparatus according to claim 10, wherein the electrochemical apparatus satisfies at least one of the following characteristics:
(1) based on a mass of the positive electrode material, peak intensity of the first oxidation peak is 2900 mAh/g/V to 4100 mAh/g/V, and peak intensity of the first reduction peak is 2535 mAh/g/V to 3830 mAh/g/V;
(2) a peak voltage of the first oxidation peak is Vo1, and a peak voltage of the first reduction peak is Vr1, wherein |Vo1-Vr1|≤0.063 V;
(3) when the electrochemical apparatus is charged and discharged at a current of 0.1 C within a voltage range of 2.8 V to 4.5 V, a discharging curve in an obtained capacity-voltage curve exhibits a plateau in the range of 4.2 V to 4.5 V, a capacity of the discharging curve in the range of 4.2 V to 4.5 V is Q1, and a capacity of the discharging curve in a range of 3.0 V to 4.5 V is Qt, wherein 0.269≤Q1/Qt≤0.331; or
(4) the differential capacity-voltage dQ/dV curve exhibits a second oxidation peak and a second reduction peak in a range of 3.6 V to 4.0 V;

12. The electrochemical apparatus according to any one of claims 9 to 11, wherein an X-ray diffraction pattern of the positive electrode material exhibits characteristic diffraction peaks in 2θ ranges of 17° to 20°, 35° to 38°, and 42° to 46°.

13. The electrochemical apparatus according to any one of claims 9 to 12, wherein the positive electrode material has a layered crystal structure belonging to R-3m space group.

14. An electronic apparatus, comprising the electrochemical apparatus according to any one of claims 9 to 13.
